Europäisches Patentamt

European Patent Office

Office européen des brevets

(19)

(11) Publication number: **0 102 147**
**A1**

## (12) EUROPEAN PATENT APPLICATION

(21) Application number: **83303489.5**

(22) Date of filing: **16.06.83**

(51) Int. Cl.³: **F 16 D 69/04**

(30) Priority: **14.07.82 GB 8220432**

(43) Date of publication of application:
**07.03.84 Bulletin 84/10**

(84) Designated Contracting States:
**AT BE CH DE FR GB IT LI LU NL SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Hodkinson, Harold**
**54, St. Martins Road Finham**
**Coventry West Midlands(GB)**

(74) Representative: **Adkins, Michael et al,**
**Withers & Rogers 4 Dyer's Buildings**
**Holborn London, EC1N 2JT(GB)**

(54) Disc brake pad.

(57) The pad comprises a sheet metal tray (12) having a lining (10) bonded therein and extending outwardly from the tray. The lining comprises a layer of insulating material (24) bonded to the tray base and a layer of friction material (25) bonded to the insulating layer. A metal reinforcement member (22) is embedded in the insulating layer spaced from the base (12a) of the tray.

EP 0 102 147 A1

MA/TH/A1951/26

- 1 -

## DISC BRAKE PAD

This invention relates to disc brake pads particularly though not exclusively for use in disc brake calipers of motor vehicles.

Disc brake pads usually comprise a substantial steel backing plate onto which a lining of friction material is bonded. The backing plate must be strong enough to both transmit application loads to the friction material and react drag forces to the vehicle structure.

Present day trends are to reduce weight of vehicle components without compromising strength functioning. This can lead to lower fuel consumption, and where unsprung weight is reduced, improvements in suspension and ride control.

Brake pad backing plates are relatively heavy components which contribute to the vehicle unsprung weight where wheel mounted calipers are used.

It has been proposed in British Patents Nos. 1,185,175 - 1,185,180 to provide a pressed steel pad backing plate bonded to the friction material lining. One problem with the constructions shown is that they do not provide adequate bending strength in the vertical plane of the pad.

An object of the present inveniton is to provide an improved brake pad of lightweight economical construction.

According to the invention there is provided a disc brake pad comprising a metal tray having a lining bonded therein and extending outwardly from the tray, and a metal reinforcement member embedded in the lining adjacent a base of the tray. The use of a reinforcement member enables the tray to be formed from a material such as sheet metal which is considerably lighter in weight than the usual substantial heavy steel backing plate of conventional brake pads.

The reinforcement member may lie substantially between the base of the tray and a plane containing the edge of a peripheral wall of the tray. Such positioning of the reinforcement member substantially increases the bending strength of the pad and the nominal wearable thickness of the lining when compared to conventional brake pads remains substantially unchanged.

In one embodiment the reinforcing member comprises a plate spaced from the base of the tray and having lateral projections extending into the lining. The projections may comprise tabs projecting out of the plane of the plate and extending towards the base of the tray. The tabs form an effective key between the reinforcement member and the lining and reinforce the tray against bending.

In another embodiment the reinforcement member comprises a flat metal strip placed edgeways adjacent or against the base of the tray. Preferably the strip is of serpentine form. The metal strip preferably defines crests and troughs respectively adjacent opposite edges of the pad. The strip may be located in the tray by projections on the tray base which extend towards the lining.

Present day trends are also demanding increased life of consumable vehicle components such as brake pads. In particular semi-metallic friction materials are being used to extend the life of brake pads. These materials have a higher conductivity than existing material and can result in excess heat being transmitted to the backing plate with the attendant danger of vaporising brake fluid and damage to rubber and plastic components of the brake caliper.

Heat insulators may be fitted to the pad backing plates but these increase the width of the pad resulting in less usable friction material, increased weight and greater cost.

To reduce this problem the lining of the pad according to the invention may comprise a layer of insulating material and a layer of friction material, the layer of insulating material being bonded between the base of the tray and the layer of friction material.

The insulating material must be compatible with the friction material layer and is preferably a friction material mix itself but without modifiers and additives.

Such an insulating layer can be of a substantial thickness without increasing the overall width of the pad or reducing the wearable thickness of friction material lining. The re-inforcement member may be embedded wholly within the insulating layer to provide the maximum thickness of insulating material without risking damage to the brake disc from the re-inforcement member at the fully worn condition.

There will be no damage likely should the insulating layer come into contact with the brake disc although the insulating layer may not give as effective braking as the friction material layer, as hereinbefore mentioned.

Disc brake pads in accordance with the invention will now be described by way of example with reference to the accompanying drawings, in which:-

Fig. 1 is a plan view of a disc brake pad according to the invention;

Fig. 2 is a vertical section through the backing tray of the pad of Fig. 1 on line II - II;

Fig. 3 is a plan view of a re-inforcement plate for use in the pad of Fig. 1;

Fig. 4 is a vertical section through a pad as shown in Fig. 1 and incorporating an insulating layer and the re-inforcement plate of Fig. 3;

Fig. 5 shows the pad of Fig. 1 in dotted outline and having a serpentine flat strip re-inforcement;

Fig. 6 is a vertical section through the brake pad of Fig. 5 on line VI - VI and incorporating an insulating layer and a re-inforcement strip; and

Fig. 7 is a view similar to Fig. 5 showing the serpentine strip in an alternative position.

The embodiments illustrated comprise brake pads having a lining comprising an insulating layer and friction material layer  though it will be realised that brake pads having a homogenous one-piece lining are within the scope of the invention.

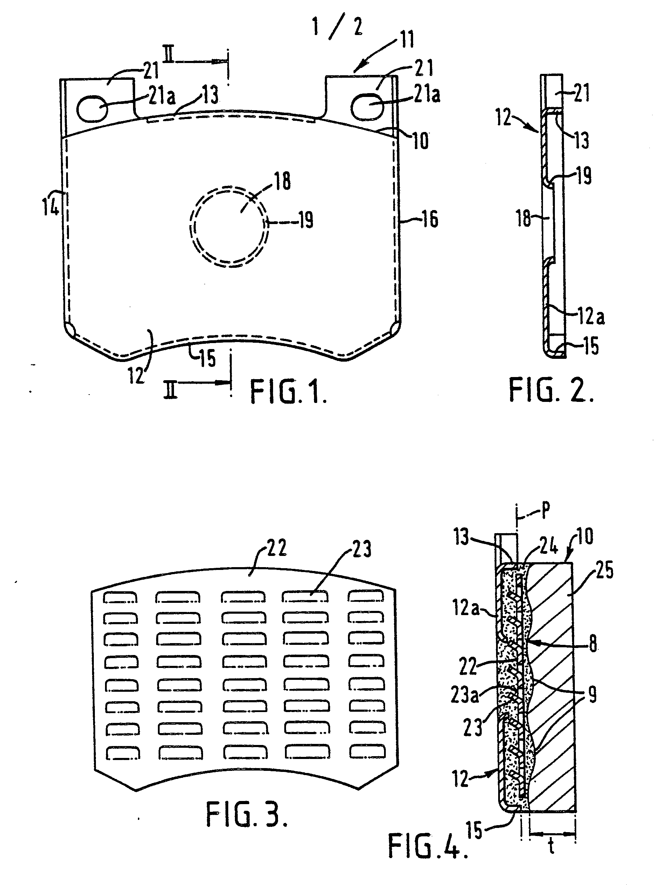

With reference to Figs. 1 - 4 there is shown a disc brake pad 11 comprising a sheet metal backing plate 12 in the form of a tray which is bonded to a lining 10. The plate comprises a base 12a having a peripheral wall comprising edge flanges 13 - 16 and a central aperture 18 having an edge flange 19.  The backing plate 12 has two lugs 21 each having an aperture 21a to receive a pad retaining pin (not shown).

A sheet metal re-inforcing plate 22, generally of the same shape as the backing plate 12 but lying within a boundary defined by the edge flanges 13 - 16, has a series of oblong tabs 23 pressed out of the plane of the backing plate 12.

The lining 10 comprises a layer of insulating material 24 bonded to the backing plate, and a layer of friction material 25 bonded to the insulating material along an interface 8. The re-inforcing plate 22 is bonded within the layer of insulating material 24 with the tabs 23 facing towards the base of the backing plate. The plate 22 is completely embedded within the layer of insulating material. The pressing out of tabs 23 leaves apertures 23a which receive the lining, though the lining material therein is omitted for clarity in Fig. 4. The tabs and apertures form a positive key between the insulating material 24 and the plate 22.

The plate 22 lies in or closely adjacent a plane P which contains the upper edges of the flanges 13 - 16. In that way the nominal wearing thickness t (Fig. 4) of the lining when compared to conventional brake pads remain substantially unchanged.

In the present construction the friction material 25 is preferably a semi-metallic material having a high thermal conductivity.

As well as forming a key, the tabs 23 serve to re-inforce the backing plate 12 against bending about the axis of symmetry without reducing the wearable thickness t of friction material.

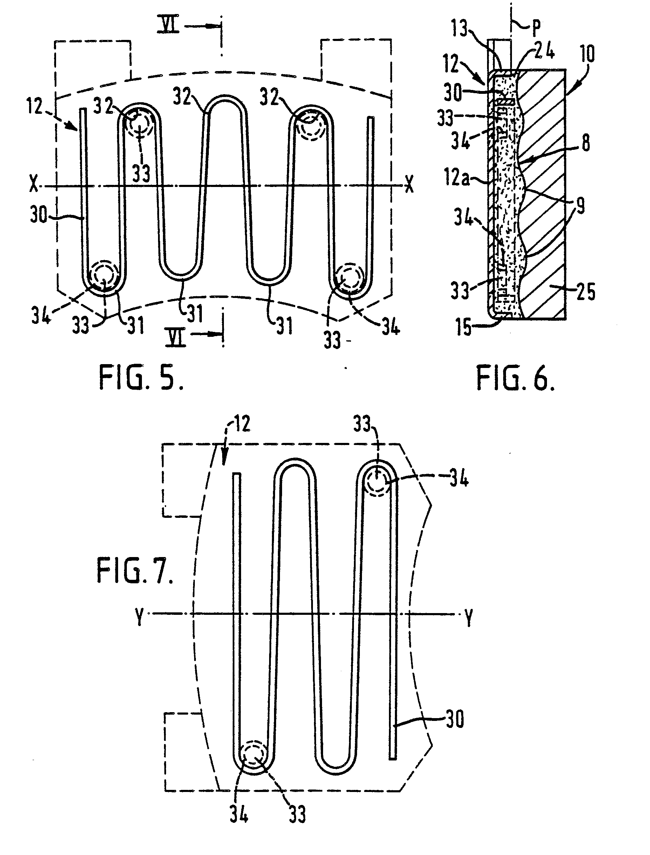

In Figs. 5 and 6, parts corresponding to parts in Figs. 1 to 4 carry the same reference numerals.

The backing plate 12 is formed with apertures 33 which have raised edge flanges 34. The edge flanges 34 locate a flat metal strip 30 of serpentine form defining crests 31 and troughs 32 adjacent opposite edges of the brake pad. The strip is embedded in a layer of insulating material 24 and lies edgewise spaced from or against the base 12a of the backing plate. The majority of the strip in a depthwise sense lies between the base 12a and the plane P. A layer of friction material 36 is bonded to the layer of insulating material 24. The interface 8 between the friction material and insulating material in Figs. 4 and 6 may be shaped to provide a suitable key between the layers e.g. by forming plurality of projections 9 in the insulating material prior to applying the friction material.

The serpentine strip shown in Fig. 5 substantially increases the bending strength of the brake pad about axis X - X extending longitudinally of the pad. However, if desired, the serpentine strip 31 can be arranged as shown in Fig. 7 so as to provide increased bending strength about axis Y - Y. Parts in Fig. 7 corresponding to parts shown in Fig. 6 carry the same reference numerals.

Other metal re-inforcements may be readily envisaged. So long as the re-inforcement is retained within the layer of insulating material or, where the brake pad has a single homogenous friction lining, substantially within the boundary imposed by the upper edges of the edge flanges 13 - 16, the layer of wearable friction material will be equivalent to that of a conventional brake pad.

The sheet metal used to form the backing plate 12 and reinforcing member 22 may be approximately 1.3 mm thick and the reinforcing strip 31 may be around 2.0mm in thickness. Therefore pads in accordance with the invention can be made much lighter in weight than pads having a heavy steel backing plate of 4.5mm typical thickness.

CLAIMS

1.      A disc brake pad comprising a metal tray (12) having a lining (10) bonded therein and extending outwardly from the tray characterised in that a metal reinforcement member (22;31) is embedded in the lining (10) adjacent a base (12a) of the tray (12).

2.      A brake pad according to claim 1, characterised in that the reinforcement member (22;31) lies substantially between the base (12a) of the tray (12) and a plane (P) containing the edge of a peripheral wall (13-16) of the tray.

3.      A brake pad according to claim 1 or 2, characterised in that the reinforcement member comprises a plate (22) spaced from the base (12a) of the tray and having lateral projections (23) extending into the lining (10).

4.      A brake pad according to claim 3, characterised in that the projections comprise tabs (23) projecting out of the plane of the plate and extending towards the base (12a) of the tray (12).

5.      A brake pad according to claim 1 or 2, characterised in that the reinforcement member comprises a flat metal strip (3) placed edgewise adjacent the base (34a) of the tray.

6.      A brake pad according to claim 5 characterised in that the strip is of serpentine form.

7.      A brake pad according to claim 6, in which the metal strip defines crests and troughs arranged respectively adjacent opposite edges of the brake pad.

8.      A brake pad according to claim 5, 6 or 7 in which the strip is located in the tray by projections on the tray base which extend towards the lining.

9.      A brake pad according to any preceding claim in which the lining comprises a layer of insulating material and a layer of friction material, the layer of insulating material being bonded between the base of the tray and the layer of friction material.

10.     A brake pad according to claim 9 in which the reinforcement member lies wholly within the layer of insulating material

0102147

FIG. 1.

FIG. 2.

FIG. 3.

FIG. 4.

FIG. 5.

FIG. 6.

FIG. 7.

0102147

European Patent
Office

**EUROPEAN SEARCH REPORT**

Application number

EP 83 30 3489

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-U-8 201 404 (JURID)<br>* Claims 1-5; figures 1-5 * | 1 | F 16 D 69/04 |
| X | Patent Abstracts of Japan Vol. 5, no. 158, 12 October 1981 & JP-A-56-86244 | 1 | |
| A | GB-A-2 058 259 (STAHL) | | |
| A | DE-B-2 655 105 (TEXTAR) | | |
| A | GB-A-1 026 225 (DAIMLER-BENZ) | | |
| D,A | GB-A-1 185 175 (TEVES) | | TECHNICAL FIELDS SEARCHED (Int. Cl. 3)<br><br>F 16 D 69/00<br>F 16 D 65/00 |
| D,A | GB-A-1 185 176 (TEVES) | | |

The present search report has been drawn up for all claims

| Place of search<br>BERLIN | Date of completion of the search<br>11-10-1983 | Examiner<br>LUDWIG H J |
|---|---|---|